# EUROPEAN PATENT SPECIFICATION

(11) **EP 4 380 785 B1**
(45) Date of publication and mention of the grant of the patent: **09.12.2026**
(21) Application number: 22760744.7
(22) Date of filing: 03.08.2022
(51) Int. Cl.: B29C 70/44

(54) **ASSEMBLY AND METHOD FOR MANUFACTURING COMPOSITE PIPES**
ANORDNUNG UND VERFAHREN ZUR HERSTELLUNG VON VERBUNDROHREN
ENSEMBLE ET PROCÉDÉ POUR LA FABRICATION DE TUYAUX COMPOSITES

(30) Priority: 04.08.2021 NL 2028918
(43) Date of publication of application: 12.06.2024
(73) Proprietor: Itrec B.V., 3115 HH Schiedam (NL)
(72) Inventor: VAN DUIVENDIJK, Pieter Dirk Melis, 3115 HH Schiedam (NL); MAX, Nicolaas Thijs Pieter, 3115 HH Schiedam (NL)
(74) Representative: EP&C
(86) International application number: PCT/EP2022/071836
(87) International publication number: WO 2023/012222

(56) References cited:
- EP-A2- 2 279 074
- WO-A1-2006/099671
- DE-A1- 102011 009 506
- FR-A1- 2 894 874

## Description

The invention relates to an assembly and a method for manufacturing composite pipes, also referred to as tubulars, i.e. hollow elongated cylinders. Composite pipes, compared to steel pipes, are lightweight and do not corrode. This type of tubulars is, for example, highly usable in the field of downhole applications, e.g. geothermal projects, transfer of corrosive liquids (e.g. in chemical plants), etc. Composite pipes are further known to provide an excellent everlasting smooth pathway for production fluids, such as liquids and gases in chemical plants.

Three different manufacturing processes are commonly used to make composite pipes: filament winding, centrifugal or rotational casting, and hand lay-up. Filament winding and centrifugal casting are used to make tubulars up to approximately 30cm in diameter, with filament winding being the most common. Hand lay-up is generally used for even larger diameter tubulars.

In filament winding, continuous filaments are saturated with liquid resin and wound around a steel mandrel. Typically, the fibers are fed through a mechanical device that moves up and down the length of the rotating mandrel. The resin is then cured at elevated temperatures and the finished pipe is removed from the mandrel. Filament winding results in a high fiber-to-resin ratio and consequently offers a high strength-to weight ratio.

The centrifugal casting process involves layering reinforcements on the inside wall of a tubular mould which is rotated at high speed. Liquid resin is then injected into the rotating mould. Centrifugal force ensures that the reinforcements are thoroughly saturated with resin and serves to drive out air bubbles that might compromise the physical properties of the pipe. The mould continues to rotate while the resin cures. The centrifugal force pushes the resin through the layers of fabric, creating a smooth finish on the outside of the pipe, and excess resin pumped into the mould creates a resin-rich corrosion- and abrasion-resistant interior.

Hand lay-up is a manual fabrication process. It involves building up layers of reinforcements such as chopped glass or woven glass mat impregnated with resin around a suitable mould. Rollers may be used to improve glass wet-out and force out trapped air bubbles. Hand lay-up is generally used for custom shapes or for large-diameter pipe where filament winding or centrifugal casting is not practical.

From WO2006099671 an apparatus for producing tubes formed from fibre reinforced composite material is known, comprising an elongate hollow mandrel having an internal mandrel cavity. Upon an external surface of the mandrel reinforcing fibre material is wrapped to provide a composite lay-up thereon. Through the mandrel cavity a fluid can be circulated enabling heat transfer from the fluid, through the mandrel to the composite lay-up for curing or forming said lay-up.

From the remote field of bicycle wheel hubs made from composition material FR289487 is known. This document describes a hub having a tubular shell of a composition material with resin-coated fibres incorporating one or more layers of fibres in the shape of at least one tubular sleeve with a braided structure. The hub shell is made in a mould comprising two halves in the opposite faces of which are arranged two half-cavities whose surfaces form, when the mould is closed, a cavity corresponding to the outer surface of the tubular shell. This cavity is open at one end. As illustrated in Figure 5, the mould is closed tightly around an expandable core formed e.g. by an inflatable bladder or balloon, which is closed at one end. A positioning rod comes out of an open end of the bladder or balloon.

From EP2279074 a method for producing a one-piece hollow structure is known. A perforated casing pipe is first covered with an airtight, expandable hose, over which at least one fibre layer is laid. The arrangement is placed into a mould corresponding to the desired component dimensions. A resin system is infused into the fibre layer and the bladder is inflated via the perforated casing pipe, pressing the resin-saturated fibres against the mould. The structure is then cured to form a hollow component.

It is an object of the invention to provide an assembly and a method for manufacturing a composite pipe.

The invention provides an assembly according to claim 1 and a method according to claim 8.

One or, as preferred, multiple layers of fibre reinforcement material are wrapped, preferably tightly wrapped, about the tubular resilient sleeve of the mandrel in a non-expanded state of the sleeve. In this state the sleeve is internally supported by the rigid internal support structure of the mandrel. The internal support of the resilient sleeve provides rigidity of the mandrel at this stage of the process, which allows for accuracy and effectiveness of the wrapping process.

For example, the wrapped layers have an outer diameter that is just about the diameter of the bore, e.g. between 0.5 and 3 millimeters smaller diameter than the bore diameter.

The bore of the mould is open at opposed ends. In practical embodiments, the bore has a uniform diameter over its length. This results in a uniform outer diameter of the moulded composite pipe. It is conceivable that one or more threaded ends of the composite pipe are to be provided. In practical embodiments, the threading is provided at a later stage, e.g. by machining one or both ends.

For example, fibre mats, e.g. glass or carbon fibre mats are used as reinforcement material to be wrapped about the sleeve in the non-expanded state thereof. After curing, the reinforcements are comprised in the thermoset to provide a composite fibre-reinforced material pipe.

Fibre mats may comprise woven or nonwoven fibres, e.g. woven with fibres mainly in perpendicular directions, e.g. weft and warp. The orientation of the woven mat relative to the main axis of the mandrel, and thus in the manufactured pipe, may be appropriately chosen, e.g. in view of desired properties of the pipe, e.g. in view of hoop strength and axial strength.

In practical embodiments, multiple layers of fibre mats are wrapped about the sleeve, preferably tightly to arrive at a hard winding of fibres about the sleeve. For example, winding of the fibre reinforcement material is done under a controlled tension of the material.

For example, fibres of the reinforcement material are made of glass, carbon, aramid, and/or basalt.

For example, glass fiber reinforcement materials are used, as they have a good tensile strength, compressive strength, and elongation to break. Polyester, vinyl ester, and epoxy resins all have a good adhesion to glass fibres. For example, the glass fibres have a length of 10 - 100 mm.

In embodiments, the glass fibres are randomly oriented so that they have the same strength in every direction. In multiaxial glass systems glass fibres are stretched in a desired orientation. Depending on the number of directions, also called axes, we speak of a biaxial (2 axes), triaxial (3 axes) or quadratil (4 axes) oriented system. Such systems give high stiffness to the product in the direction of the axes. The density of such glass systems may e.g. vary between 100 g/m2 - 1500 g/m2.

The reinforcement fibre material is to be wrapped around the mandrel. Tape, such as adhesive tape, e.g. of plastic material, may be used to assist in the wrapping. In embodiments, the tape is not removed and thus included into the manufactured composite pipe.

Advantageously, the reinforcement material is tightly wrapped around the mandrel, e.g. in order to obtain a high strength pipe.

In embodiments, fibres are wrapped around the sleeve as done in filament winding, yet the use of fibre mats is preferred.

The mandrel with the fibre reinforcement material wrapped about the sleeve of the mandrel in its non-expanded state is accommodated in the bore of the mould, such that the fibre reinforcement material is located in an annulus between the tubular resilient sleeve of the mandrel and the mould. As explained above, preferably a small, minimal, or neglectable play is present between the wrapped fibre reinforcement material and the mould. The presence of some play between the wrapped fibres and the mould may help to prevent untimely displacements which could generate a lack of fibres in a particular area.

The seal members provide seals between the mould and the mandrel that has been accommodated in the bore of the mould, so as to close the annulus thus providing a closed annulus that is closed at ends thereof.

The closed annulus, and thus the fibre reinforcement material wrapped about the sleeve of the mandrel present within the closed annulus, is, preferably, evacuated by means of the vacuum pump that is connected to the evacuating opening.

The thermosetting resin, which has the property of shrinking upon curing, is introduced/injected into the closed annulus, preferably into the already evacuated closed annulus, via a resin injection opening. The resin permeates the fibre reinforcement material and fills the annulus.

For example, evacuation of the closed annulus is done at one end of the mould and the introduction of the resin at the opposite end of the mould, so that the resin creeps through the fibre reinforcement material from one axial end thereof to the other axial end. For example, introduction of resin is halted just before the resin reaches the evacuation opening, e.g. avoiding that this opening becomes blocked by the resin. In another embodiment, resin is introduced in the centre of the closed mould and evacuation is done at both outer ends of the mould, so that resin flows from the centre to either outer end.

The method involves the supply by a supply means, e.g. a liquid pump, of the pressurizing fluid, e.g. liquid, e.g. water, to the mandrel in order to internally pressurize the resilient sleeve and thereby cause the diametrical expansion into the expanded state thereof whilst curing of the thermosetting resin takes place. The pressure of the liquid may be constant during the curing, but may also be varied over time during the curing. For example, the pressure is increased towards the end of the curing, e.g. in view of increased effective strength of the curing pipe.

In practical embodiments, curing of the resin that has been filled into the annulus, preferably with the sleeve being and remaining in expanded state, may take more than one hour to be fully completed, e.g. several hours, e.g. three or more hours. For example, the degree of curing reaches about 20% after one hour, then advances to about 60 - 70% in the next hour, and then takes one hour or more to reach 100% or thereabout.

In practical embodiments, temperatures during curing may reach above 70 °C, e.g. between 70 and 95 °C.

Once curing is sufficiently completed, e.g. prior to removal of the mandrel and the obtained composite pipe from the mould, the internal pressurizing of the sleeve is terminated, so that the resilient sleeve reverses to the non-expanded state thereof. This eases, for example, separation of the composite pipe from the mandrel, e.g. after removal of the mandrel from the mould.

In practical embodiments, the resilient sleeve is embodied as a plastic pipe, e.g. an extruded plastic pipe, e.g. a pipe of PVC (polyvinylchloride), PE (polyethylene), or of PP (polypropylene). For example, the sleeve, e.g. plastic pipe, is clamped or glued at ends thereof onto the internal support of the mandrel and is devoid of any further mechanical attachments to the internal support in between the clamped ends.

In an embodiment, the mandrel and the resilient sleeve are longer than the bore of the mould. For example, each clamped end of the sleeve is located outside the bore of the mould when the mandrel with the fibre reinforcement material wrapped thereon is accommodated in the bore of the mould.

As preferred, the outside of the sleeve, e.g. embodied as a plastic pipe, is cylindrical and smooth, so devoid of any relief thereon so as to obtain a smooth cylindrical inner diameter of the composite pipe.

As preferred, the resilient sleeve has a uniform cross-section over its length. This results in a uniform inner diameter of the moulded composite pipe.

For example, the resilient sleeve, e.g. of extruded polymer plastic, e.g. of PVC, PE, or PP, has a wall thickness of several millimeters in non-expanded state, e.g. between 2 and 8 millimeters, e.g. between 4 and 6 millimeters, e.g. for outer diameters of the non-expanded resilient sleeve between 10 and 30 centimetres. The internal pressure may be at least 5 bars, e.g. between 5 and 20 bars.

The internal pressurization of the resilient sleeve and the termination thereof once curing has been completed fully or at least in a sufficient manner, brings along numerous benefits.

For example, due to the thermosetting resin shrinking upon curing, the moulded the moulded pipe tends to get stuck on the mandrel. The design and operation of the inventive assembly and/or method allows to avoid or at least reduce this problem.

For example, due to shrinkage of the resin upon curing, undue irregularities in the inner and/or outer surface of the composite pipe and/or undue presence of voids in the thickness of the pipe may occur. The design and operation of the inventive assembly and/or method allows to avoid or at least reduce these problems.

The resin may be a thermosetting polymer. The polymer may be, for example, an epoxy, a vinyl ester, or a polyester thermosetting plastic. A thermosetting polymer, often called a thermoset, is a polymer that is obtained by irreversibly hardening, i.e. curing, a soft solid or viscous liquid prepolymer, called resin.

Generally, curing is a process induced by heat or suitable radiation and may be promoted by high pressure, or mixing with a catalyst. Heat may be applied externally, and is often generated by the reaction of the resin with a curing agent, such as a catalyst or hardener. Curing results in chemical reactions that create extensive cross-linking between polymer chains to produce an infusible and insoluble polymer network. Upon curing the thermoset resin, the polymers act as binder or matrix to secure the reinforcements in place. Continuing research has led to an increased range of thermoset resins for use in the manufacture of composite pipes.

A composite pipe made in a batch manufacturing process with an assembly and/or method according to the invention may have a length of several meters, e.g. may have a length of between 1 and 12 meters, for example a length between 3 and 6 meters, preferably of 12 meters allowing effective shipping in an ISO freight container.

A composite pipe made batchwise with an assembly and/ or method according to the invention may have an outer diameter of at least 15 cm, e.g. between 20 and 40 cm.

A composite pipe made batchwise with an assembly and/ or method according to the invention may have an inner diameter of at least 10 cm, e.g. between 15 and 35 cm.

A composite pipe made batchwise with an assembly and/ or method according to the invention may have a wall thickness of at least 25 mm, e.g. between 35 and 70 mm.

Exemplary dimensions of composite pipes of the invention are in millimetres, outer diameter x inner diameter: 206 x 167, 298 x 248, 372 x 311.

The assembly may comprise a resin injection apparatus for the supply of thermosetting resin that shrinks upon curing to the closed annulus. A resin injection apparatus is well-known in the art.

In embodiments, the resin is introduced into the closed annulus at an elevated pressure, e.g. of several bars, e.g. up to 10 bar. In embodiments, the sleeve remains in its non-expanded state during introduction of resin into the closed annulus, e.g. with the supply of pressurized resin being completed and stopped prior to the internal pressurization of the sleeve.

In embodiments, a heated thermosetting resin is supplied to the closed annulus, e.g. in view of the desired progress of the curing process and/or in view of viscosity of the resin that has to permeate the fibre reinforcement material. Possibly, the resin injection apparatus is provided with a heater, heating the resin that is to be injected, e.g. up to between 40 and 60 °C.

In embodiments, the mould is heated prior to injection of heated resin to a temperature comparable to the temperature of the heated resin, e.g. to between 40 and 60 °C.

The outer diameter of the mandrel, so of the non-expanded sleeve, is generally representative of the inner diameter of the composite pipe, as the expansion of the sleeve is rather small.

The length of the mandrel, preferably, exceeds that of the composite pipe to be made and is e.g. in the order of several meters.

The thickness of the wrapped reinforcements is generally representative of the thickness of the wall of the composite pipe that is to be made.

In embodiments, expansion of the sleeve is started after the closed annulus has been sufficiently filled with resin, and the wrapped fibre material impregnated with the resin. Advantageously, the timing and/or degree of the expansion of the sleeve is tuned to the shrinking process of the resin during curing thereof.

The mandrel with the wrapped reinforcements is to be brought into a mould having a bore, such that a portion of the mandrel with the wrapped reinforcement material thereon is located in an annulus between the tubular mandrel and the mould.

The mould can be a split mould, e.g. with two mould halves split over the length of the mould, e.g. allowing for complete opening of the mould for a lateral introduction of the wrapped mandrel or allowing for spacing of the halves to facilitate lengthwise introduction of the wrapped mandrel into the mould.

In another embodiment, the mould can be split in the middle of its length into two mould halves, allowing to pull each halve of the mould away (e.g. after removal of the seal member) to release the mandrel with the manufactured pipe from the mould. This is advantageous for the production of elongated composite pipes. It is conceivable that a mandrel having fibre reinforced material wrapped over a length of e.g. 10 or 12 meters is positioned in a split mould having two mould halves of 5-6 meters. In order to remove the 10-12 meter composite pipe, a halve of the mould is to be pulled away to allow the manufactured composite pipe to be slided from the mandrel.

The wrapping and transfer into the mould is enhanced by suitable rigidity of the mandrel.

In order to provide sufficient rigidity, in embodiments, the mandrel includes an internal support structure embodied as a metal tube that fits inside the tubular sleeve. For example, an aluminium tube is provided.

In embodiments, a small gap between the metal tube and the non-expanded sleeve of the mandrel is present, e.g. of less than 0.5mm, preferably less than 0.2 mm.

To allow the tubular sleeve to be internally pressurized by liquid, e.g. water, so that the diameter of the sleeve is expanded, the metal tube inside the tubular sleeve is advantageously provided with perforations, e.g. evenly distributed, allowing to expose the inside of the resilient sleeve to the pressure of the pressurizing fluid the inside of the tube of the mandrel. For example, a perforated metal tube is provided. For example, the perforations are rather small, e.g. in order to avoid that injection of pressurized resin into the closed annulus causes undue local indentation of the sleeve, e.g. the injection being done ahead of pressurization of the mandrel. This indentation effect can also be counteracted by having the mandrel filled with the liquid ahead of injection of the resin into the closed annulus, e.g. the liquid being at atmospheric pressure so effectively not pressurized at the stage of injecting the resin.

For example, the mandrel has a metal tube closed at ends thereof to create a chamber therein to which, via one of the ends, a pressurized liquid can be supplied. For example, at one end pressurized liquid is fed to the chamber and via the opposite end the liquid is discharged, when a circulation of liquid through the mandrel is desired, e.g. in view of temperature control of the mandrel. In embodiments, the resilient sleeve is fitted over a perforated zone of the metal tube, with ends of the resilient sleeve being clamped or otherwise secured on the metal tube. Thereby, upon pressurization of the chamber, also the inside of the sleeve is uniformly exposed to the internal fluid pressure as a result of which the sleeve will tend to expand in diameter.

As preferred, the mandrel is devoid of any mechanical connections between the sleeve and the internal support, e.g. the metal tube, apart from the ends of the resilient sleeve.

The use of metal for the internal support structure not only provides rigidity but also may be beneficial in view of thermal conductivity for the exothermic curing process. Heat generated during curing of resin may be dissipated by volume of pressurizing fluid. Advantageously, pressurizing fluid is circulated through the mandrel for temperature control.

The pressurizing fluid is, preferably, used to create a pressure of at least 5 bar, preferably 10 bar or even more inside the resilient sleeve. The pressurizing fluid is, for example, water. It is noted that in embodiments, the resin is injected into the annulus at a pressure of several bars, e.g. of at least 5 bar.

The assembly is provided with an injection opening used for entry of the thermosetting resin from the thermosetting resin supply into the annulus in order to permeate the reinforcement material and to fill the closed annulus. Preferably, the annulus has been evacuated prior to resin being introduced, e.g. under pressure. The process of permeating the fibre reinforcement is also referred to as transferring, from which the term resin transfer moulding originates. Transfer moulding is sometimes used for moulding using higher pressures to fill the mould cavity, than pressures used for a process referred to as injection moulding.

In embodiments, multiple resin injection openings are provided and used. For example, multiple resin injection openings are provided radially around the annulus. Advantageously, an injection opening is provided at a central part of the mould, injecting the resin into a central part of the annulus and allowing flow of the resin towards both of the ends of the annulus. An advantage of a central supply, compared to supply at one end of the annulus, is that shifting of the reinforcement material as a result of the resin flow is prevented or reduced.

In embodiments the mould is provided with one or more evacuating openings for evacuating the annulus, and the assembly is provided with a vacuum pump connected to the evacuating opening. Preferably, the evacuating opening is provided at an end of the annulus. It is conceivable that evacuating takes place prior to and/or during injection of the resin into the annulus. Evacuating prior to injection may assist in contraction of the wrapped reinforcements. Evacuation prior to injection may also attribute in the removal of undesired volatile components from the reinforcement material, such as moisture. Evacuation during injection may attribute to the prevention of bubbles in the reinforced pipe after curing of the resin. Preferably, evacuation takes place until the resin flow has (almost) reached the evacuating opening(s).

In embodiments, the supply means for the pressurizing fluid is embodied and operated to circulate the pressurizing fluid through the mandrel. Herein, preferably, temperature control means are provided and operated to control the temperature of the pressurizing fluid circulated through the mandrel. For example, the temperature control means comprise heat exchange means that are configured and operated to controllable cool and/or heat the circulating liquid. For example, the flow rate and temperature of the circulating liquid, as well as the pressure thereof, are controlled, e.g. monitored continuously during the process, e.g. by a computerized controller.

In embodiments, the mould is provided with temperature control means that are configured and operated to control the temperature of the bore of the mould. For example, the temperature control means comprising heat exchange means configured and operated to controllable cool and/or heat the mould.

The pressurizing fluid may attribute to control of the temperature during the curing process. In embodiments, the pressurizing fluid is circulated through the mandrel, e.g. during the curing of the resin or part thereof. This circulation of pressurizing fluid may also serve for control of the temperature during the curing process. Heat may be provided to the curing resin by means of the (circulating flow of) pressurizing fluid, or may be removed away from the resin, e.g. as the circulating liquid is heated or cooled by a heat exchanger device, e.g. a heater device and/or a cooling device.

Advantageously, the flow rate of the circulating pressurizing fluid is adjustable to assist in the temperature control and thus in the progress of the curing process.

In embodiments, the assembly comprises a controller, e.g. computerized, that is linked to both the temperature control means that control the temperature of the pressurizing fluid, and optionally the circulation of the pressurizing fluid through the mandrel, and linked to the temperature control means to control the temperature of the bore of the mould. Preferably, the controller is configured and operated to establish a predetermined temperature profile over the thickness of the composite pipe during the curing of the resin.

In embodiments, the assembly comprises a controller, e.g. computerized, that is linked to the supply means for pressurized fluid, e.g. liquid, e.g. water, and controls the pressure in the mandrel.

In an embodiment, in view of a desired temperature profile during curing, heat is effectively removed via the pressurized liquid in the mandrel while the mould is heated by one or more heating devices. This, for example, allows to accelerate curing of the resin at the outer perimeter of the composite pipe. For example, this allows to obtain a more uniform curing process seen over the thickness of the wall of the composite pipe.

In embodiments, the mould is made of metal, e.g. steel. For example, heater devices, e.g. electrical heaters, are applied to the outside of the metal mould for control of the temperature of the mould.

In practical embodiments, both the mould and the mandrel are stationary during curing of the resin, so no centrifugal operation of the mould is envisaged.

In practical embodiments, the manufactured pipe has a uniform inner and outer diameter over most of its length, preferably its entire length.

For connection of pipes end-to-end to make up a longer tubular, it is envisaged in practical embodiments that an adhesively bonded joint is provided between adjoining tubulars. This well-known approach offers integrated sealing and minimal part count and does not require tubular extremities with complex geometries such as a thread or a bell and spigot configurations. In practical embodiments, an adhesive joint results in a uniform stress distribution, undamaged fibre architecture, and smooth surface contours.

In embodiments, the pipe manufactured according to the invention is later provided, e.g. by machining, at one or both extremities with a connection feature, e.g. with a screw thread.

In embodiments, the mould is provided with a connector formation, e.g. a screw thread formation, e.g. at one or both ends of the bore of the mould, each formation forming a connection portion, e.g. a rib or a thread, directly integral with the composite pipe during the inventive process. Such a mould eliminates the need for a secondary thread-forming operation, when a threaded composite pipe is envisaged.

In embodiments, prior to the wrapping of reinforcements, a metal foil, e.g. brass foil is provided around zones of the mandrel where the wrapping of fibre material ends. The step of wrapping of the reinforcement material is then followed by cutting the reinforcement material to obtain a desired length of the wrapped material, which cutting is done onto the foil that effectively protects the sleeve from being damaged. Then the foil is removed as well as the cut-off portions of the reinforcement material.

The invention also relates to a method for moulding a composite pipe of fibre reinforcement material and a thermosetting resin, comprising the steps of:
- accommodating a mandrel with fibre reinforcement material wrapped about a non-expanded tubular resilient sleeve of the mandrel in a bore of a mould, such that the fibre reinforcement material is located in an annulus between the tubular resilient sleeve of the mandrel and the mould;
- arranging seal members to provide a seal at each end of the bore between the mould and the mandrel accommodated in the bore of the mould, so as to close the annulus in order to provide a closed annulus that is closed at ends thereof,
- preferably, evacuating the closed annulus by means of a vacuum pump connected to an evacuating opening,
- introducing a thermosetting resin that shrinks upon curing into the closed annulus, preferably the evacuated closed annulus, via a resin injection opening, the resin permeating the fibre reinforcement material and filling the annulus;
- supplying by a supply means, a pressurizing fluid, e.g. pressurizing liquid, to the mandrel to internally pressurize the sleeve to cause the diametrical expansion into the expanded state thereof whilst curing of the thermosetting resin takes place;
- once curing is complete, e.g. prior to removal of the mandrel from the mould, terminating the internal pressurizing of the sleeve so that the sleeve reverse to the non-expanded state.

This method can be combined with one or more features as discussed in relation to the assembly according to the claim 1 and method according to claim 10.

The invention also relates to a method for moulding a composite pipe of fibre reinforcement material and a thermosetting resin, comprising the steps of:
- accommodating a cylindrical wrapping of fibre reinforcement material in a bore of a mould and arranging a non-expanded tubular resilient sleeve within the wrapping, e.g. after accommodating the cylindrical wrapping in the mould, such that the fibre reinforcement material is located in an annulus between the tubular resilient sleeve and the mould;
- arranging seal members so as to close the annulus in order to provide a closed annulus that is closed at ends thereof,
- preferably, evacuating the closed annulus by means of a vacuum pump connected to an evacuating opening,
- introducing a thermosetting resin that shrinks upon curing into the closed annulus, preferably the evacuated closed annulus, via a resin injection opening, the resin permeating the fibre reinforcement material and filling the annulus;
- supplying by a supply means, a pressurizing fluid, e.g. pressurizing liquid, to internally pressurize the sleeve to cause the diametrical expansion into the expanded state thereof whilst curing of the thermosetting resin takes place;
- once curing is complete, e.g. prior to removal of the mandrel from the mould, terminating the internal pressurizing of the sleeve so that the sleeve reverse to the non-expanded state.

This method can be combined with one or more features as discussed in relation to the assembly according to the claim 1 and method according to claim 10.

For example, the wrapping is made about an auxiliary mandrel, lacking a resilient sleeve, and then placed with the auxiliary mandrel in the mould. Then the auxiliary mandrel is withdrawn and a mandrel as described herein, or just the resilient sleeve thereof when desired, is placed within the wrapping. The process is then performed in a manner as described herein.

The present invention also relates to a mandrel as described herein and the use thereof for the manufacture of a composite pipe.

The invention is further elucidated in relation to the drawings, in which:
Fig. 1a is a cross-section of an assembly of the invention including a composite pipe;
Fig. 1b is a detailed view of one end of the assembly of fig. 1a;
Fig. 1c is a detailed view of the opposite end of the assembly of fig. 1a,
Fig. 2 schematically shows the circuit for the pressurizing fluid,
Figs. 3a, 3b illustrate a temperature profile during the manufacturing process as well as the degree of curing, and
Fig. 4 illustrates another embodiment of the assembly of the invention including a composite pipe.

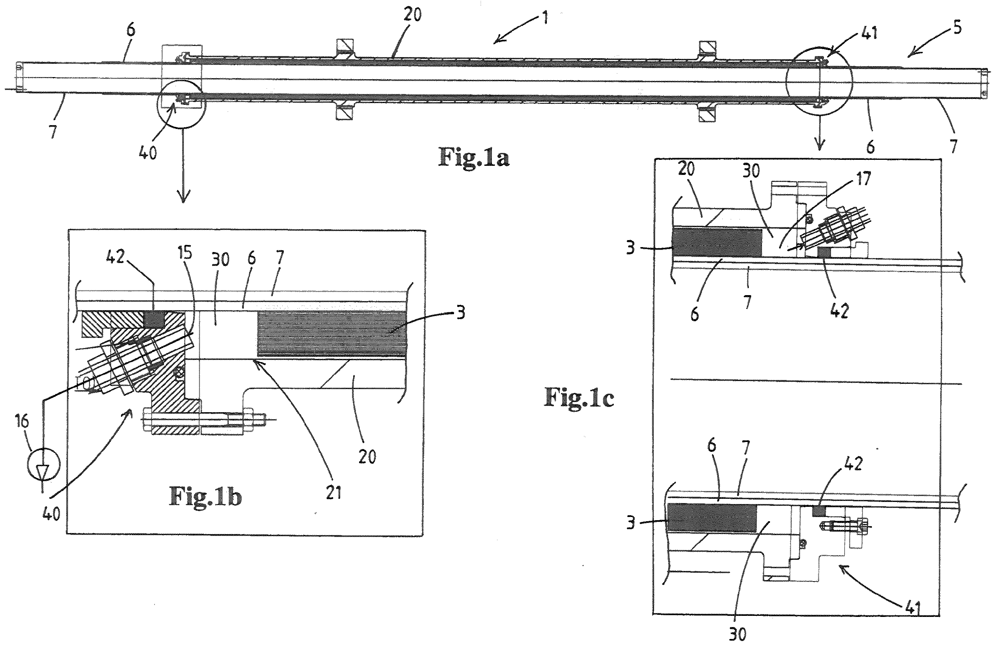

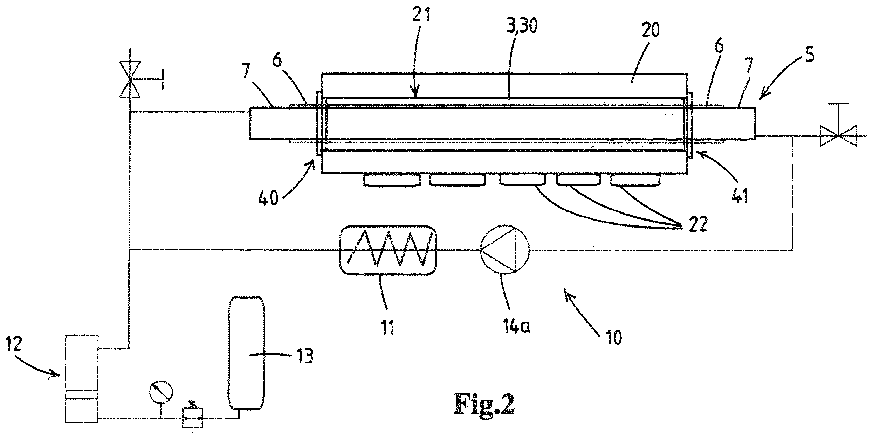

In the figures 1 and 2 an assembly 1 or installation for moulding a composite pipe of fibre reinforcement material and a thermosetting resin is illustrated.

A mandrel 5 has a tubular resilient sleeve 6 and a rigid internal support structure 7 for the sleeve 6. The sleeve 6 is reversibly expandable in diameter between a non-expanded state, wherein the sleeve is internally supported by the rigid internal support structure 7 and an expanded state by application of an internal fluid pressure to the sleeve 6, e.g. using a pressurizing liquid, e.g. water.

The tubular resilient sleeve 6 is, for example, a plastic pipe, e.g. a pipe of PVC, PE, or PP, e.g. an extruded plastic pipe.

Figure 2 illustrate a supply means 10 for a pressurizing fluid, preferably a pressurizing liquid, e.g. water as shown here. The supply means 10 is in connection with the mandrel 5 to internally pressurize the sleeve 6 to cause the diametrical expansion into the expanded state thereof.

The figures 1 and 2 illustrate a mould 20 having an open ended bore 21 that is configured for accommodation of the mandrel 5 therein in a condition wherein fibre reinforcement material 3, e.g. woven fibre mat, has been wrapped (tightly in multiple layers) around the tubular resilient sleeve 6 of the mandrel in the non-expanded state thereof, such that the fibre reinforcement material is located in an annulus 30 between the tubular resilient sleeve 6 of the mandrel 5 and the mould 20.

The bore of the mould 20 is open at opposed ends of the bore. For each end a releasably mountable seal member 40, 41 is provided having a central passage for the mandrel 5 and a sealing ring 42 associated with central passage and configured for sealing onto the mandrel, preferably onto the sleeve 6.

Two seal members 40, 41 are configured to provide seals between the mould 20 and the mandrel 5 when accommodated in the bore of the mould, so as to close the annulus in order to provide a closed annulus that is closed at ends thereof. The wrapped section of the mandrel is then located within the closed annulus. The seals may be O-rings that engage on the sleeve of the mandrel.

One of the seal members 40 has an evacuating opening 15 for evacuating the closed annulus by means of a vacuum pump 16 connected to the evacuating opening.

The other one of the seal members 41, in this example, has a resin injection opening 17 configured for introduction of a thermosetting resin from a thermosetting resin supply means into the closed annulus 30, preferably the evacuated closed annulus, the resin permeating the fibre reinforcement material 3 and filling the annulus 30.

The rigid internal support structure for the tubular resilient sleeve comprises a rigid tube, here a metal tube 7, arranged inside of the sleeve such that the sleeve 6 in the non-expanded state thereof fits onto the rigid tube. The tube 7 is provided with perforations to allow said internal pressurizing of the sleeve by introducing a pressurized fluid, preferably liquid, into the rigid tube.

As shown in figure 2 the supply means 10 is embodied to circulate a pressurizing fluid through the mandrel 5. Here the pressurizing is done by a gas/liquid separator 12 being connected to a controllable pressure gas tank 13 at one side, and to the liquid circulation circuit 14 at the other side. A pump 14a causes the liquid, e.g. water, to circulate through the circuit 14 when desired.

Temperature control means 11 are provided to control the temperature of the pressurizing fluid circulated through the mandrel 5, e.g. the temperature control means comprising heat exchange means 11 configured to controllable cool and/or heat the liquid.

The mould is provided with temperature control means 22 to control the temperature of the bore of the mould, e.g. the temperature control means comprising heat exchange means configured to controllable cool and/or heat the mould, e.g. electric heaters 22 fitted to a metal mould 21.

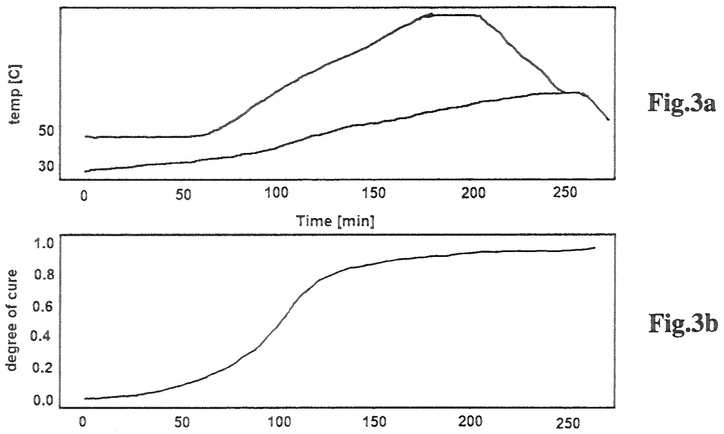

In embodiments, a controller is linked to both the temperature control means 11 that control the temperature of the pressurizing fluid being circulated through the mandrel 5 and linked to the temperature control means 22 to control the temperature of the bore of the mould 20, preferably said controller being configured to establish a predetermined temperature profile over the thickness of the composite pipe during the curing of the resin (which profile may vary over time during the process as shown in figure 3a,b).

The method for moulding a composite pipe of fibre reinforcement material and a thermosetting resin, comprises the steps of:
- (tightly) wrapping, in one or more layers, fibre reinforcement material 3 about the tubular resilient sleeve 6 of a mandrel 5 in a non-expanded state of the sleeve,
- accommodating the mandrel 5 with the fibre reinforcement material 3 wrapped about the sleeve 6 of the mandrel in the bore of the mould 20, such that the fibre reinforcement material is located in the annulus 30 between the tubular resilient sleeve 6 of the mandrel and the mould;
- arranging the seal members 40, 41 to provide seals between the mould and the mandrel accommodated in the bore of the mould, so as to close the annulus 30 in order to provide a closed annulus that is closed at ends thereof,
- evacuating the closed annulus 30 by means of the vacuum pump connected to the evacuating opening 15,
- introducing a thermosetting resin that shrinks upon curing into the closed annulus 30, preferably the evacuated closed annulus, via a resin injection opening 17, the resin permeating the fibre reinforcement material 3 and filling the annulus 30;
- supplying by the supply means 10, a pressurizing fluid, e.g. pressurizing liquid, to the mandrel 5 to internally pressurize the sleeve 6 to cause the diametrical expansion into the expanded state thereof whilst curing of the thermosetting resin takes place;
- once curing is complete, e.g. prior to removal of the mandrel from the mould, terminating the internal pressurizing of the sleeve 6 so that the sleeve reverse to the non-expanded state.

Figures 3a, b illustrate that curing may takes several hours, e.g. in this example the wall thickness of the composite pipe being about 13 mm with an outer diameter of 200 mm.

In embodiments, the mould 20 is preheated to about 45 °C and the water that has been filled into the circuit 14 to about 30 °C and at atmospheric pressure.

Evacuating the closed annulus 30 may bring along a removal of moisture from the wrapped fibre reinforcement material, as is considered a benefit.

The resin to be injected may be preheated to about the same temperature as the mould, e.g. to about 45 °C. The final injection of resin may be done at a controlled pressure, e.g. at maximum 10 bars. Herein, both the circuit 14 being filled with non-pressurized liquid and the rigid tube 7 serve to prevent collapse of the sleeve 6 due to resin pressure thereon.

Evacuation is halted when the resin has reached the proximity of the evacuation opening, e.g. this opening being shut by a valve. If possible, filling with resin is continued until no more reason can be injected into the closed annulus, so that resin pressure may reach, for example, several bars, e.g. maximum 10 bars.

The supply means 10 is now operated to pressurize the liquid in circuit 14, e.g. to a maximum pressure of 10 bars so that the sleeve 6 is brought in its expanded state. The expansion of the sleeve is able to compensate for the volumetric shrinkage of the resin which occurs during the curing process.

The curing may be controlled by suitable control of the temperature profile across the thickness of the wall of the composite pipe during the curing. Figure 3a illustrates as upper graph a possible temperature of the face of the bore during the process, and as lower graph the temperature of the face of the sleeve during the process. As can be seen, the sleeve is preheated to about 30 °C by circulation of heated water through the mandrel.

Once curing is completed, a cooling stage of the process is performed, e.g. by circulating cold water through the mandrel 5.

The water pressure in the mandrel 5 is relieved once the obtained composite pipe has been sufficiently cooled. The relief of internal pressure allows the resilient sleeve to return to its non-expanded state, which effectively releases the sleeve from the pipe, at least assists in said release.

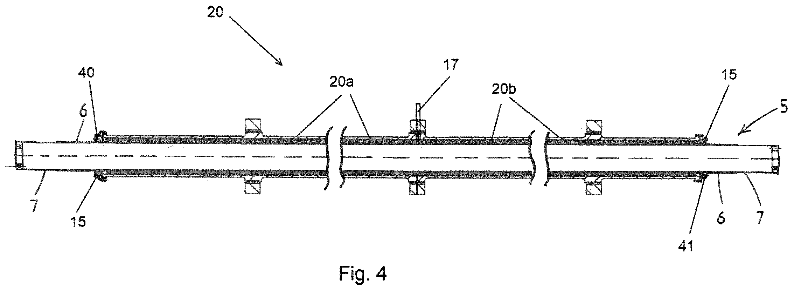

The figure 4 illustrates an embodiment of the mould 20, wherein the mould is configured to be split in the middle of its length into two mould halves 20a, 20b.

Each mould halve 20a, b is generally tubular, so with an undivided circumferential wall. This allows to effectively absorb the forces on the mould have due to pressures within the mould 20 during production of the composite pipe, e.g. compared to an embodiment wherein the mould is divided over its length which requires the provision of significant closing force to keep the mould closed during production.

Generally, the embodiment with two halves 20a, 20b allows to pull each halve 20a, 20b of the mould axially away (e.g. after removal of the seal member) to release the mandrel 5 with the manufactured pipe from the mould 20.

For example, the assembly of figure 4 is used for the production of composite pipes having a length of 10 - 12 meters, e.g. each mould have 20a, 20b having an effective length between 5 and 6 meters. For example, pipes of 12 meter length can be effectively transported in ISO freight containers.

The depicted mandrel 5 has a corresponding length as fibre reinforced material has been wrapped over a corresponding length, e.g. over 10 - 12 meters, about the sleeve 6. Then each mould halve 20a, 20b is slid over the respective portion of the wrapped mandrel 5 and the mould 20 is closed, e.g. by interconnecting the inner ends of the mould halves 20a, b and the provision of sealing members 40, 41.

It is illustrated, as preferred, that introducing a thermosetting resin that shrinks upon curing into the closed annulus is done via at least one centrally located resin injection opening 17, the resin flowing from the central location of the mould 20 to the outer ends of the closed mould 20 and permeating the fibre reinforcement material and filling the annulus. For example, as shown, the injection opening 17 is located where the mould halves 20a, b adjoin one another, e.g. integrated into a flange at the end of the mould halve.

It is illustrated, as preferred, that at each outer end of the closed mould 20 an evacuating opening 15 is present via which the closed annulus is evacuated by means of a vacuum pump that is connected to the opening 15.

It is illustrated, as preferred, that at the outer end of each of the mould halves 20a, 20b a respective seal members 40, 41 is arranged in order to provide seals between the closed mould 20 and the mandrel 5 accommodated in the bore of the mould, so as to provide a closed annulus that is closed at ends thereof. As shown, the evacuation opening 15 can be integrated into the respective seal member 40, 41.

## Claims

1. Assembly for moulding a composite pipe of fibre reinforcement material (3) and a thermosetting resin, comprising:
- a mandrel (5) having a tubular resilient sleeve (6) and a rigid internal support structure (7) for the sleeve, which sleeve is reversibly expandable in diameter between a non-expanded state wherein the sleeve is internally supported by the rigid internal support structure and an expanded state by application of an internal fluid pressure to the sleeve;
- a supply means (10) for a pressurizing fluid, preferably a pressurizing liquid, e.g. water, that is in connection with the mandrel to internally pressurize the sleeve to cause the diametrical expansion into the expanded state thereof;
- a mould (20) having a bore (21) open at opposed ends, and configured for accommodation of the mandrel (5) therein in a condition wherein fibre reinforcement material (3) has been wrapped around the tubular resilient sleeve (6) of the mandrel in the non-expanded state thereof, such that the fibre reinforcement material is located in an annulus (30) between the tubular resilient sleeve (6) of the mandrel and the mould (20);
- seal members (40, 41) that are configured to provide a seal at each end of the bore between the mould (20) and the mandrel (5) when accommodated in the bore of the mould, so as to close the annulus in order to provide a closed annulus that is closed at ends thereof,
wherein, preferably, the assembly has an evacuating opening (15) for evacuating the closed annulus by means of a vacuum pump (16) connected to the evacuating opening;
wherein the assembly has a resin injection opening (17) configured for introduction of a thermosetting resin from a thermosetting resin supply means into the closed annulus (30), preferably the evacuated closed annulus, the resin permeating the fibre reinforcement material and filling the annulus.

2. Assembly according to claim 1, wherein the rigid internal support structure for the tubular resilient sleeve comprises a rigid tube, e.g. a metal tube (7), arranged inside of the sleeve such that the sleeve (6) in the non-expanded state thereof fits onto the rigid tube, wherein the tube (7) is provided with perforations to allow said internal pressurizing of the sleeve by introducing a pressurized fluid, preferably liquid, into the rigid tube.

3. Assembly according to claim 1 or 2, wherein temperature control means (11) are provided to control the temperature of the pressurizing fluid, e.g. the temperature control means comprising heat exchange means configured to controllable cool and/or heat the pressurizing fluid.

4. Assembly according to any one or more of the preceding claims, wherein the mould is provided with temperature control means (22) to control the temperature of the bore of the mould, e.g. the temperature control means comprising heat exchange means configured to controllable cool and/or heat the mould, e.g. electric heaters fitted to a metal mould.

5. Assembly according to any one or more of the preceding claims, wherein the tubular resilient sleeve is secured to the rigid internal support structure only at ends of the sleeve, and/or wherein the tubular resilient sleeve (6) is a plastic pipe, e.g. an extruded plastic pipe, e.g. a pipe of PVC, PE, or PP.

6. Assembly according to any one or more of the preceding claims, wherein for each open end of the bore a releasably mountable seal member (40, 41) is provided having a central passage for the mandrel (5) and a sealing ring (42) associated with central passage and configured for sealing onto the mandrel, preferably onto the sleeve (6), wherein preferably one seal member (41) is provided with an evacuating opening (15) for evacuating the closed annulus (30) by means of a vacuum pump connected to the evacuating opening.

7. Assembly according to claims 3 and 4, wherein the assembly comprises a controller that is linked to both the temperature control means (11) that control the temperature of the pressurizing fluid and linked to the temperature control means (22) to control the temperature of the bore of the mould, preferably said controller being configured to establish a predetermined temperature profile over the thickness of the composite pipe during the curing of the resin.

8. Method for moulding a composite pipe of fibre reinforcement material and a thermosetting resin, comprising the steps of:
- wrapping, in one or more layers, fibre reinforcement material (3) about a tubular resilient sleeve (6) of a mandrel (5) in a non-expanded state of the sleeve, the mandrel further comprising a rigid internal support structure (6) for the sleeve, which sleeve is reversibly expandable in diameter between the non-expanded state wherein the sleeve is internally supported by the rigid internal support structure and an expanded state by application of an internal fluid pressure, preferably internal liquid pressure, to the sleeve;
- accommodating the mandrel with the fibre reinforcement material (3) wrapped about the sleeve of the mandrel in a bore of a mould (20), such that the fibre reinforcement material is located in an annulus (30) between the tubular resilient sleeve (6) of the mandrel and the mould;
- arranging seal members (40, 41) to provide one or more seals between the mould and the mandrel accommodated in the bore of the mould, so as to close the annulus (30) in order to provide a closed annulus that is closed at ends thereof,
- preferably, evacuating the closed annulus (30) by means of a vacuum pump connected to an evacuating opening (15),
- introducing a thermosetting resin that shrinks upon curing into the closed annulus (30), preferably the evacuated closed annulus, via a resin injection opening (17), the resin permeating the fibre reinforcement material (3) and filling the annulus (30);
- supplying by a supply means, a pressurizing fluid, e.g. pressurizing liquid, to the mandrel (5) to internally pressurize the sleeve (6) to cause the diametrical expansion into the expanded state thereof whilst curing of the thermosetting resin takes place;
- once curing is complete, e.g. prior to removal of the mandrel from the mould, terminating the internal pressurizing of the sleeve (6) so that the sleeve reverses to the non-expanded state.

9. Method according to claim 8, wherein the rigid internal support structure for the tubular resilient sleeve comprises a rigid tube, e.g. a metal tube (7), that is arranged inside of the sleeve (6) such that the sleeve in the non-expanded state thereof fits onto the rigid tube, wherein the tube is provided with perforations allowing said internal pressurizing of the sleeve by introducing a pressurized fluid, e.g. liquid, into the rigid tube.

10. Method according to claim 8 or 9, wherein temperature control means (11) are provided that are configured and operated to control the temperature of the pressurizing fluid, e.g. the temperature control means comprising heat exchange means configured and operated to controllable cool and/or heat the liquid.

11. Method according to any one or more of the preceding claims 8-10, wherein the mould is provided with temperature control means (22) that are configured and operated to control the temperature of the bore of the mould (20), e.g. the temperature control means comprising heat exchange means that are configured and operated to controllable cool and/or heat the mould.

12. Method according to any one or more of the preceding claims, wherein for each end of the bore a releasably mountable seal member (40, 41) is provided having a central passage for the mandrel and a sealing ring associated with a central passage and configured for sealing onto the mandrel, preferably onto the sleeve (6), wherein preferably one seal member is provided with said evacuating opening (10) for evacuating the closed annulus by means of a vacuum pump connected to the evacuating opening.

13. Method according to claims 10 and 11, wherein a controller is linked to both the temperature control means (11) that control the temperature of the pressurizing fluid and linked to the temperature control means (22) that control the temperature of the bore of the mould, preferably said controller being configured and operated to establish a predetermined temperature profile over the thickness of the composite pipe during the curing of the resin.

14. Method according to any one or more of the preceding claims 8 - 13, wherein prior to the wrapping of fibre reinforcement material (3) about the sleeve, a metal foil e.g. a brass foil, is provided around end zones of the mandrel, and wherein the wrapping of fibre reinforcement material is followed by a cutting of the wrapped fibre reinforcement material in each end zone to obtain a predetermined length of the wrapped fibre reinforcement material, followed by removing the foil prior to accommodating the mandrel with the bore of the mould.

## Patentansprüche

1. Anordnung zum Formen eines Verbundrohrs aus Faserverstärkungsmaterial (3) und einem duroplastischen Harz, umfassend:
- einen Dorn (5) mit einer rohrförmigen elastischen Hülse (6) und einer starren inneren Stützstruktur (7) für die Hülse, wobei die Hülse im Durchmesser zwischen einem nicht expandierten Zustand, in dem die Hülse innen durch die starre innere Stützstruktur gestützt wird, und einem expandierten Zustand durch Anlegen eines inneren Fluiddrucks an die Hülse reversibel expandierbar ist;
- ein Zuführmittel (10) für ein druckbeaufschlagendes Fluid, vorzugsweise eine druckbeaufschlagende Flüssigkeit, z. B. Wasser, das mit dem Dorn in Verbindung steht, um die Hülse innen unter Druck zu setzen, um die diametrale Expansion in ihren expandierten Zustand zu bewirken;
- ein Formwerkzeug (20) mit einer an gegenüberliegenden Enden offenen Bohrung (21), das zur Unterbringung des Dorns (5) darin ausgelegt ist, in einem Zustand, bei dem Faserverstärkungsmaterial (3) um die rohrförmige elastische Hülse (6) des Dorns in deren nicht expandierten Zustand gewickelt wurde, so dass sich das Faserverstärkungsmaterial in einem Ringraum (30) zwischen der rohrförmigen elastischen Hülse (6) des Dorns und dem Formwerkzeug (20) befindet;
- Dichtungselemente (40, 41), die dazu ausgelegt sind, an jedem Ende der Bohrung zwischen dem Formwerkzeug (20) und dem Dorn (5), wenn er in der Bohrung des Formwerkzeugs untergebracht ist, eine Dichtung bereitzustellen, um den Ringraum zu schließen, um einen geschlossenen Ringraum bereitzustellen, der an seinen Enden geschlossen ist,
wobei die Anordnung vorzugsweise eine Evakuierungsöffnung (15) zum Evakuieren des geschlossenen Ringraums mittels einer Vakuumpumpe (16) aufweist, die mit der Evakuierungsöffnung verbunden ist;
wobei die Anordnung eine Harzeinspritzöffnung (17) aufweist, die zum Einbringen eines duroplastischen Harzes aus einem duroplastischen Harzzuführmittel in den geschlossenen Ringraum (30), vorzugsweise den evakuierten geschlossenen Ringraum, ausgelegt ist, wobei das Harz das Faserverstärkungsmaterial durchdringt und den Ringraum füllt.

2. Anordnung nach Anspruch 1, wobei die starre innere Stützstruktur für die rohrförmige elastische Hülse ein starres Rohr, z. B. ein Metallrohr (7), umfasst, das innerhalb der Hülse so angeordnet ist, dass die Hülse (6) in ihrem nicht expandierten Zustand auf das starre Rohr passt,
wobei das Rohr (7) mit Perforationen versehen ist, um das innere Druckbeaufschlagen der Hülse durch Einbringen eines druckbeaufschlagten Fluids, vorzugsweise druckbeaufschlagter Flüssigkeit, in das starre Rohr zu ermöglichen.

3. Anordnung nach Anspruch 1 oder 2, wobei Temperatursteuermittel (11) bereitgestellt werden, um die Temperatur des druckbeaufschlagenden Fluids zu steuern, z. B. wobei die Temperatursteuermittel Wärmetauschmittel umfassen, die ausgelegt sind, um das druckbeaufschlagende Fluid steuerbar zu kühlen und/oder zu erwärmen.

4. Anordnung nach einem oder mehreren der vorhergehenden Ansprüche, wobei das Formwerkzeug mit Temperatursteuermitteln (22) zum Steuern der Temperatur der Bohrung des Formwerkzeugs versehen ist, z. B. wobei das Temperatursteuermittel Wärmetauschmittel umfasst, die zum steuerbaren Kühlen und/oder Erwärmen der Form ausgelegt sind, z. B. elektrische Heizer, die an einem Metallformwerkzeug angebracht sind.

5. Anordnung nach einem oder mehreren der vorhergehenden Ansprüche, wobei die rohrförmige elastische Hülse nur an Enden der Hülse an der starren inneren Stützstruktur befestigt ist und/oder wobei die rohrförmige elastische Hülse (6) ein Kunststoffrohr, z. B. ein extrudiertes Kunststoffrohr, z. B. ein Rohr aus PVC, PE oder PP, ist.

6. Anordnung nach einem oder mehreren der vorhergehenden Ansprüche, wobei für jedes offene Ende der Bohrung ein lösbar montierbares Dichtungselement (40, 41) bereitgestellt ist, das einen zentralen Durchgang für den Dorn (5) und einen Dichtungsring (42) aufweist, der mit dem zentralen Durchgang assoziiert ist und zum Abdichten auf dem Dorn, vorzugsweise auf der Hülse (6), ausgelegt ist, wobei vorzugsweise ein Dichtungselement (41) mit einer Evakuierungsöffnung (15) zum Evakuieren des geschlossenen Ringraums (30) mittels einer mit der Evakuierungsöffnung verbundenen Vakuumpumpe versehen ist.

7. Anordnung nach den Ansprüchen 3 und 4, wobei die Anordnung eine Steuerung umfasst, die sowohl mit den Temperatursteuermitteln (11), die die Temperatur des druckbeaufschlagenden Fluids steuern, als auch mit den Temperatursteuermitteln (22) verknüpft ist, um die Temperatur der Bohrung des Formwerkzeugs zu steuern, wobei die Steuerung vorzugsweise ausgelegt ist, um ein vorbestimmtes Temperaturprofil über die Dicke des Verbundrohrs während des Aushärtens des Harzes zu erzeugen.

8. Verfahren zum Formen eines Verbundrohrs aus Faserverstärkungsmaterial und einem duroplastischen Harz, umfassend die Schritte:
- Wickeln von Faserverstärkungsmaterial (3) in einer oder mehreren Schichten um eine rohrförmige elastische Hülse (6) eines Dorns (5) in einem nicht expandierten Zustand der Hülse, wobei der Dorn ferner eine starre innere Stützstruktur (6) für die Hülse umfasst, wobei die Hülse im Durchmesser zwischen dem nicht expandierten Zustand, in dem die Hülse innen durch die starre innere Stützstruktur gestützt wird, und einem expandierten Zustand durch Anlegen eines inneren Fluiddrucks, vorzugsweise eines inneren Flüssigkeitsdrucks, an die Hülse reversibel expandierbar ist;
- Unterbringen des Dorns mit dem um die Hülse des Dorns gewickelten Faserverstärkungsmaterial (3) in einer Bohrung eines Formwerkzeugs (20), so dass sich das Faserverstärkungsmaterial in einem Ringraum (30) zwischen der rohrförmigen elastischen Hülse (6) des Dorns und dem Formwerkzeug befindet;
- Anordnen von Dichtungselementen (40, 41), um eine oder mehrere Dichtungen zwischen dem Formwerkzeug und dem in der Bohrung des Formwerkzeugs untergebrachten Dorn bereitzustellen, um den Ringraum (30) zu verschließen, um einen geschlossenen Ringraum bereitzustellen, der an seinen Enden geschlossen ist;
- vorzugsweise Evakuieren des geschlossenen Ringraums (30) mittels einer Vakuumpumpe, die mit einer Evakuierungsöffnung (15) verbunden ist,
- Einbringen eines duroplastischen Harzes, das beim Aushärten schrumpft, in den geschlossenen Ringraum (30), vorzugsweise den evakuierten geschlossenen Ringraum, über eine Harzeinspritzöffnung (17), wobei das Harz das Faserverstärkungsmaterial (3) durchdringt und den Ringraum (30) füllt;
- Zuführen eines druckbeaufschlagenden Fluids, z. B. druckbeaufschlagender Flüssigkeit, durch ein Zuführmittel zu dem Dorn (5), um die Hülse (6) innen mit Druck zu beaufschlagen, um die diametrale Expansion in deren expandierten Zustand zu bewirken, während Aushärten des duroplastischen Harzes stattfindet;
- nach Abschluss der Aushärtung, z. B. vor Entfernen des Dorns aus dem Formwerkzeug, Beenden der inneren Druckbeaufschlagung der Hülse (6), so dass die Hülse in den nicht expandierten Zustand zurückkehrt.

9. Verfahren nach Anspruch 8, wobei die starre innere Stützstruktur für die rohrförmige elastische Hülse ein starres Rohr, z. B. ein Metallrohr (7), umfasst, das innerhalb der Hülse (6) so angeordnet ist, dass die Hülse in ihrem nicht expandierten Zustand auf das starre Rohr passt, wobei das Rohr mit Perforationen versehen ist, die besagte innere Druckbeaufschlagen der Hülse durch Einbringen eines druckbeaufschlagten Fluids, z. B. druckbeaufschlagter Flüssigkeit, in das starre Rohr ermöglichen.

10. Verfahren nach Anspruch 8 oder 9, wobei Temperatursteuermittel (11) bereitgestellt werden, die ausgelegt sind und betrieben werden, um die Temperatur des druckbeaufschlagenden Fluids zu steuern, z. B. wobei die Temperatursteuermittel Wärmetauschmittel umfassen, die ausgelegt sind und betrieben werden, um die Flüssigkeit steuerbar zu kühlen und/oder zu erwärmen.

11. Verfahren nach einem oder mehreren der vorhergehenden Ansprüche 8-10, wobei das Formwerkzeug mit Temperatursteuermitteln (22) versehen ist, die dazu ausgelegt sind und betrieben werden, um die Temperatur der Bohrung des Formwerkzeugs (20) zu steuern, wobei z. B. die Temperatursteuermittel Wärmetauschmittel umfassen, die dazu ausgelegt sind und betrieben werden, das Formwerkzeug steuerbar zu kühlen und/oder zu erwärmen.

12. Verfahren nach einem oder mehreren der vorhergehenden Ansprüche, wobei für jedes Ende der Bohrung ein lösbar montierbares Dichtungselement (40, 41) bereitgestellt wird, das einen zentralen Durchgang für den Dorn und einen Dichtungsring aufweist, der mit einem zentralen Durchgang assoziiert ist und zum Abdichten auf dem Dorn, vorzugsweise auf der Hülse (6), ausgelegt ist, wobei vorzugsweise ein Dichtungselement mit der Evakuierungsöffnung (10) zum Evakuieren des geschlossenen Ringraums mittels einer Vakuumpumpe versehen ist, die mit der Evakuierungsöffnung verbunden ist.

13. Verfahren nach den Ansprüchen 10 und 11, wobei eine Steuerung sowohl mit den Temperatursteuermitteln (11), welche die Temperatur des druckbeaufschlagenden Fluids steuern, als auch mit den Temperatursteuermitteln (22), welche die Temperatur der Bohrung des Formwerkzeugs steuern, verknüpft ist, wobei die Steuerung vorzugsweise ausgelegt ist und betrieben wird, um ein vorbestimmtes Temperaturprofil über die Dicke des Verbundrohrs während des Aushärtens des Harzes zu erzeugen.

14. Verfahren nach einem oder mehreren der vorhergehenden Ansprüche 8-13, wobei vor dem Wickeln von Faserverstärkungsmaterial (3) um die Hülse eine Metallfolie, z. B. eine Messingfolie, um Endzonen des Dorns herum bereitgestellt wird, und wobei dem Wickeln von Faserverstärkungsmaterial ein Schneiden des gewickelten Faserverstärkungsmaterials in jeder Endzone folgt, um eine vorbestimmte Länge des gewickelten Faserverstärkungsmaterials zu erhalten, gefolgt von Entfernen der Folie vor dem Unterbringen des Dorns in der Bohrung des Formwerkzeugs.

## Revendications

1. Ensemble pour le moulage d'un tuyau composite constitué d'un matériau de renforcement fibreux (3) et d'une résine thermodurcissable, comprenant :
- un mandrin (5) comportant un manchon tubulaire élastique (6) et une structure de support interne rigide (7) pour le manchon, lequel manchon est expansible de manière réversible en diamètre entre un état non expansé, dans lequel le manchon est soutenu intérieurement par la structure de support interne rigide, et un état expansé par application d'une pression de fluide interne au manchon ;
- un moyen d'alimentation (10) en fluide de mise sous pression, de préférence en liquide de mise sous pression, par exemple en eau, qui est relié au mandrin pour mettre le manchon sous pression intérieurement afin de provoquer son expansion diamétrale jusqu'à son état expansé ;
- un moule (20) comportant un alésage (21) ouvert à ses extrémités opposées et configuré pour recevoir le mandrin (5) dans un état dans lequel un matériau de renforcement fibreux (3) a été enroulé autour du manchon tubulaire élastique (6) du mandrin dans son état non expansé, de telle sorte que le matériau de renforcement fibreux soit situé dans un espace annulaire (30) entre le manchon tubulaire élastique (6) du mandrin et le moule (20) ;
- des éléments d'étanchéité (40, 41) configurés pour assurer une étanchéité à chaque extrémité de l'alésage entre le moule (20) et le mandrin (5) lorsque celui-ci est reçu dans l'alésage du moule, de manière à fermer l'espace annulaire afin de former un espace annulaire fermé à ses extrémités,
dans lequel, de préférence, l'ensemble comporte un orifice d'évacuation (15) destiné à mettre sous vide l'espace annulaire fermé au moyen d'une pompe à vide (16) raccordée à l'orifice d'évacuation ;
dans lequel l'ensemble comporte un orifice d'injection de résine (17) configuré pour introduire une résine thermodurcissable depuis un moyen d'alimentation en résine thermodurcissable dans l'espace annulaire fermé (30), de préférence dans l'espace annulaire fermé mis sous vide, la résine imprégnant le matériau de renforcement fibreux et remplissant l'espace annulaire.

2. Ensemble selon la revendication 1, dans lequel la structure de support interne rigide du manchon tubulaire élastique comprend un tube rigide, par exemple un tube métallique (7), disposé à l'intérieur du manchon de telle sorte que le manchon (6), dans son état non expansé, s'ajuste sur le tube rigide,
dans lequel le tube (7) est pourvu de perforations pour permettre ladite mise sous pression interne du manchon par introduction d'un fluide sous pression, de préférence d'un liquide, dans le tube rigide.

3. Ensemble selon la revendication 1 ou 2, dans lequel des moyens de régulation de température (11) sont prévus pour réguler la température du fluide de mise sous pression, par exemple les moyens de régulation de température comprenant des moyens d'échange thermique configurés pour refroidir et/ou chauffer de manière régulée le fluide de mise sous pression.

4. Ensemble selon une ou plusieurs des revendications précédentes, dans lequel le moule est pourvu de moyens de régulation de température (22) pour réguler la température de l'alésage du moule, par exemple les moyens de régulation de température comprenant des moyens d'échange thermique configurés pour refroidir et/ou chauffer de manière régulée le moule, par exemple des éléments chauffants électriques montés sur un moule métallique.

5. Ensemble selon une ou plusieurs des revendications précédentes, dans lequel le manchon tubulaire élastique est fixé à la structure de support interne rigide uniquement aux extrémités du manchon, et/ou dans lequel le manchon tubulaire élastique (6) est un tuyau en matière plastique, par exemple un tuyau en matière plastique extrudé, par exemple un tuyau en PVC, en PE ou en PP.

6. Ensemble selon une ou plusieurs des revendications précédentes, dans lequel, pour chaque extrémité ouverte de l'alésage, est prévu un élément d'étanchéité (40, 41) pouvant être monté de manière amovible et comportant un passage central pour le mandrin (5) et une bague d'étanchéité (42) associée au passage central et configurée pour assurer une étanchéité sur le mandrin, de préférence sur le manchon (6), dans lequel, de préférence, un élément d'étanchéité (41) est pourvu d'un orifice d'évacuation (15) destiné à mettre sous vide l'espace annulaire fermé (30) au moyen d'une pompe à vide raccordée à l'orifice d'évacuation.

7. Ensemble selon les revendications 3 et 4, dans lequel l'ensemble comprend un dispositif de commande qui est relié à la fois aux moyens de régulation de température (11) qui régulent la température du fluide de mise sous pression et aux moyens de régulation de température (22) pour réguler la température de l'alésage du moule, de préférence ledit dispositif de commande étant configuré pour établir un profil de température prédéterminé sur l'épaisseur du tuyau composite pendant le durcissement de la résine.

8. Procédé de moulage d'un tuyau composite constitué d'un matériau de renforcement fibreux et d'une résine thermodurcissable, comprenant les étapes suivantes :
- l'enroulement, en une ou plusieurs couches, d'un matériau de renforcement fibreux (3) autour d'un manchon tubulaire élastique (6) d'un mandrin (5) dans un état non expansé du manchon, le mandrin comprenant en outre une structure de support interne rigide (6) pour le manchon, lequel manchon est expansible de manière réversible en diamètre entre l'état non expansé, dans lequel le manchon est soutenu intérieurement par la structure de support interne rigide, et un état expansé par application d'une pression de fluide interne, de préférence d'une pression de liquide interne, au manchon ;
- la mise en place du mandrin, avec le matériau de renforcement fibreux (3) enroulé autour du manchon du mandrin, dans un alésage d'un moule (20), de telle sorte que le matériau de renforcement fibreux soit situé dans un espace annulaire (30) entre le manchon tubulaire élastique (6) du mandrin et le moule ;
- la mise en place d'éléments d'étanchéité (40, 41) pour assurer une ou plusieurs étanchéités entre le moule et le mandrin reçu dans l'alésage du moule, de manière à fermer l'espace annulaire (30) afin de former un espace annulaire fermé à ses extrémités,
- de préférence, la mise sous vide de l'espace annulaire fermé (30) au moyen d'une pompe à vide raccordée à un orifice d'évacuation (15),
- l'introduction d'une résine thermodurcissable qui se rétracte lors du durcissement, dans l'espace annulaire fermé (30), de préférence dans l'espace annulaire fermé mis sous vide, par l'intermédiaire d'un orifice d'injection de résine (17), la résine imprégnant le matériau de renforcement fibreux (3) et remplissant l'espace annulaire (30) ;
- l'alimentation du mandrin (5), par un moyen d'alimentation, en fluide de mise sous pression, par exemple en liquide de mise sous pression, pour mettre le manchon (6) sous pression intérieurement afin de provoquer son expansion diamétrale jusqu'à son état expansé pendant le durcissement de la résine thermodurcissable ;
- une fois le durcissement terminé, par exemple avant le retrait du mandrin du moule, l'arrêt de la mise sous pression interne du manchon (6) de sorte que le manchon revienne à l'état non expansé.

9. Procédé selon la revendication 8, dans lequel la structure de support interne rigide du manchon tubulaire élastique comprend un tube rigide, par exemple un tube métallique (7), qui est disposé à l'intérieur du manchon (6) de telle sorte que le manchon, dans son état non expansé, s'ajuste sur le tube rigide, dans lequel le tube est pourvu de perforations permettant ladite mise sous pression interne du manchon par introduction d'un fluide sous pression, par exemple d'un liquide, dans le tube rigide.

10. Procédé selon la revendication 8 ou 9, dans lequel des moyens de régulation de température (11) sont prévus, lesquels sont configurés et mis en œuvre pour réguler la température du fluide de mise sous pression, par exemple les moyens de régulation de température comprenant des moyens d'échange thermique configurés et mis en œuvre pour refroidir et/ou chauffer de manière régulée le liquide.

11. Procédé selon une ou plusieurs des revendications précédentes 8 à 10, dans lequel le moule est pourvu de moyens de régulation de température (22) qui sont configurés et mis en œuvre pour réguler la température de l'alésage du moule (20), par exemple les moyens de régulation de température comprenant des moyens d'échange thermique qui sont configurés et mis en œuvre pour refroidir et/ou chauffer de manière régulée le moule.

12. Procédé selon une ou plusieurs des revendications précédentes, dans lequel, pour chaque extrémité de l'alésage, est prévu un élément d'étanchéité (40, 41) pouvant être monté de manière amovible et comportant un passage central pour le mandrin et une bague d'étanchéité associée à un passage central et configurée pour assurer une étanchéité sur le mandrin, de préférence sur le manchon (6), dans lequel, de préférence, un élément d'étanchéité est pourvu dudit orifice d'évacuation (10) destiné à mettre sous vide l'espace annulaire fermé au moyen d'une pompe à vide raccordée à l'orifice d'évacuation.

13. Procédé selon les revendications 10 et 11, dans lequel un dispositif de commande est relié à la fois aux moyens de régulation de température (11) qui régulent la température du fluide de mise sous pression et aux moyens de régulation de température (22) qui régulent la température de l'alésage du moule, de préférence ledit dispositif de commande étant configuré et mis en œuvre pour établir un profil de température prédéterminé sur l'épaisseur du tuyau composite pendant le durcissement de la résine.

14. Procédé selon une ou plusieurs des revendications précédentes 8 à 13, dans lequel, avant l'enroulement du matériau de renforcement fibreux (3) autour du manchon, une feuille métallique, par exemple une feuille de laiton, est disposée autour de zones d'extrémité du mandrin, et dans lequel l'enroulement du matériau de renforcement fibreux est suivi d'une découpe du matériau de renforcement fibreux enroulé dans chaque zone d'extrémité pour obtenir une longueur prédéterminée du matériau de renforcement fibreux enroulé, suivie du retrait de la feuille avant la mise en place du mandrin dans l'alésage du moule.
